# DEMANDE DE BREVET EUROPEEN

(11) **EP 3 018 507 A1**
(43) Date de publication de la demande: **11.05.2016**
(21) Numéro de dépôt: 14306775.9
(22) Date de dépôt: 06.11.2014
(51) Int. Cl.: G02B 6/036, H04B 10/071, H04L 29/06, G02B 6/44

(54) **Dispositif et procédé pour la détection d'une atteinte à l'intégrité d'une ligne de transport d'un signal optique**

(71) Demandeur: ALCATEL LUCENT, 92100 Boulogne-Billancourt (FR)
(72) Inventeur: Chiaroni, Dominique, 91620 NOZAY (FR); Bigo, Sébastien, 91620 NOZAY (FR)
(74) Mandataire: Berthier, Karine

(57) **Abrégé**

Le dispositif pour la détection d'une atteinte à l'intégrité d'une ligne de transport d'un signal optique porteur de données comprend une ligne de transport comportant une zone guidante centrale comprenant au moins un guide d'onde pour la transmission d'un signal optique porteur de données et un guide d'onde périphérique coaxial à la zone guidante centrale. Le dispositif comprend aussi un émetteur d'un signal optique de sonde couplé au guide d'onde périphérique de la ligne de transport, un signal optique de sonde circulant dans le guide d'onde périphérique de la ligne de transport, et un détecteur du signal optique de sonde couplé au guide d'onde périphérique de la ligne de transport qui mesure la puissance du signal optique de sonde et détecte une variation anormale de la puissance du signal optique de sonde. Le procédé comprend l'émission d'un signal optique de sonde qui est injecté dans le guide d'onde périphérique de la ligne de transport, et la détection d'une variation anormale de la puissance du signal optique de sonde.

## Description

### DOMAINE

La présente invention se rapporte au domaine des réseaux de télécommunication par liaison optique, et en particulier à la sécurité de tels réseaux notamment vis-à vis de tentatives d'intrusion.

### ARRIERE PLAN

La sécurité des réseaux de communication est un sujet de plus en plus sensible qui cristallise l'intérêt des opérateurs et des usagers. En particulier pour des utilisateurs amenés à échanger des informations hautement confidentielles, par exemple une armée ou un gouvernement, il est essentiel de pouvoir détecter le plus tôt possible toute tentative d'intrusion sur le réseau de télécommunication visant à accéder aux données transportées.

Pour protéger les données, une technique de cryptographie est souvent utilisée, qui comprend habituellement avec une modification périodique du code de déchiffrage. Cependant une personne qui souhaiterait s'introduire dans la communication pourrait mettre un coupleur sur une ligne de transport d'un signal optique porteur de données du réseau de télécommunication. Un travail sur le long terme lui permettra de décoder la clé de cryptographie. En effet aucun code n'est sûr à 100%, et bien souvent lorsque l'intrusion est enfin détectée, il est trop tard pour la contrecarrer. La technique avancée de cryptographie quantique offre plus de possibilités, mais ne peut pas être utilisée sur les réseaux de télécommunication à longue distance.

### RESUME

Il s'agit donc de proposer une solution permettant de détecter le plus tôt possible une tentative d'intrusion physique sur un réseau de télécommunication par liaison optique situé dans des zones géographiques accessibles au public. En particulier il est nécessaire de détecter avec précision où et quand la tentative d'intrusion se produit, permettant d'intervenir avant que l'intrusion ait créée une dégradation préjudiciable.

L'objet de la présente invention est une ligne de transport d'un signal optique porteur de données comportant une zone guidante centrale d'axe X-X' comprenant au moins un guide d'onde pour la transmission d'un signal optique porteur de données et un guide d'onde périphérique coaxial à l'axe X-X' de la zone guidante centrale.

Selon un aspect, le guide d'onde périphérique comprend
- une couche centrale d'indice de réfraction np,
- une couche interne, adjacente à la face interne de la couche centrale, d'indice de réfraction ni,
- une couche externe, adjacente à la face externe de la couche centrale, d'indice de réfraction ne,
l'indice de réfraction np de la couche centrale étant inférieur à l'indice de réfraction ni de la couche interne, et inférieur à l'indice de réfraction ne de la couche externe.

Selon un autre aspect, le guide d'onde périphérique est de forme tubulaire fermée ayant une section circulaire, ovale, carrée ou rectangulaire.

La ligne de transport a une structure qui offre une sécurité améliorée vis-à-vis du signal optique porteur de données circulant dans la zone guidante centrale, sans impact sur la capacité de la ligne de transport. La zone guidante centrale est protégée par le guide optique périphérique qui permet de détecter dans un délai bref une intrusion venant de l'extérieur.

La présente invention a aussi pour objet un dispositif pour la détection d'une atteinte à l'intégrité d'une ligne de transport d'un signal optique porteur de données comprenant
- une ligne de transport telle que précédemment décrite comprenant un guide d'onde périphérique,
- un émetteur d'un signal optique de sonde couplé au guide d'onde périphérique de la ligne de transport,
- un signal optique de sonde circulant dans le guide d'onde périphérique de la ligne de transport,
- un détecteur du signal optique de sonde couplé au guide d'onde périphérique de la ligne de transport,
dans lequel le détecteur mesure la puissance du signal optique de sonde et détecte une variation anormale de la puissance du signal optique de sonde.

La solution proposée est un dispositif qui permet de détecter une atteinte à l'intégrité d'une ligne de transport d'un signal optique porteur de données. Lorsqu'une personne mal intentionnée tente d'extraire par couplage une fraction du signal optique qui se propage dans la zone guidante centrale, au moins une partie des matériaux entourant la zone guidante centrale ont besoin d'être éliminés afin de donner accès à au moins un guide optique. La zone guidante centrale est alors protégée par le guide optique périphérique actif permettant de détecter immédiatement une intrusion venant de l'extérieur qui provoque une dégradation atteignant le guide périphérique. L'intrusion est surveillée à l'extrémité de la ligne de transport du signal optique.

Selon un premier mode de réalisation, l'émetteur d'un signal optique de sonde comprend
- une source d'émission d'un signal optique pulsé,
- un dispositif diffractant couplé à la source d'émission,
- un guide d'onde de section variable dont une extrémité est couplée au dispositif diffractant et dont l'extrémité opposée est couplée au guide d'onde périphérique de la ligne de transport, de manière à injecter le signal optique de sonde dans le guide d'onde périphérique.

Selon un deuxième mode de réalisation, la source d'émission du signal optique de sonde est reliée à une première extrémité de la ligne de transport et le détecteur est relié à une seconde extrémité de la ligne de transport de manière à mesurer la puissance du signal de sonde transmis.

Selon un troisième mode de réalisation, la source d'émission du signal optique de sonde est reliée à une première extrémité de la ligne de transport et le détecteur est relié à la première extrémité de la ligne de transport de manière à mesurer la puissance d'un signal optique de sonde réfléchi.

Selon un quatrième mode de réalisation, le détecteur est couplé au guide d'onde périphérique par l'intermédiaire d'un coupleur optique.

La présente invention a encore pour objet un réseau de télécommunication comportant au moins un dispositif de détection d'une atteinte à l'intégrité d'une ligne de transport tel que décrit précédemment.

La présente invention a encore pour objet un procédé pour la détection d'une atteinte à l'intégrité d'une ligne de transport d'un signal optique telle que précédemment décrite au moyen du dispositif tel que décrit précédemment, comprenant
- l'émission d'un signal optique de sonde qui est injecté dans le guide d'onde périphérique de la ligne de transport,
- la circulation du signal optique de sonde dans le guide d'onde périphérique,
- la mesure de la puissance du signal optique de sonde,
- la détection d'une variation anormale de la puissance du signal optique de sonde.

Avantageusement le signal optique de sonde est émis périodiquement sous la forme d'impulsions successives. Dans le cas de la détection par une technique de réflectométrie, le guide d'onde périphérique est utilisé comme un capteur uniformément distribué. Un pic de réflexion devient alors visible, et la discontinuité d'indice de réfraction créée dans le guide d'onde périphérique par la tentative d'intrusion est ainsi immédiatement détectée au niveau de l'émetteur. L'écart entre le pic de référence temporelle, correspondant à l'impulsion de signal de sonde envoyé dans le guide périphérique, et le pic réfléchi peut être mesuré. Il devient donc possible de détecter avec précision où et quand la tentative d'intrusion s'est produite, et d'intervenir avant que l'intrusion ait créée un dommage.

Selon un mode de réalisation, la détection d'une variation anormale de la puissance du signal optique de sonde est réalisée par une mesure de puissance effectuée par un détecteur placé à l'extrémité de la ligne de transport opposée à celle où se trouve un émetteur de signal optique de sonde.

Selon un autre mode de réalisation, la détection d'une variation anormale de la puissance du signal optique de sonde est réalisée par une mesure de puissance effectuée par un détecteur placé à l'extrémité de la ligne de transport située du même côté que celle où se trouve un émetteur de signal optique de sonde.

Dans ce dernier cas, le procédé présente en outre les caractéristiques suivantes
- une réflexion, au moins partielle, du signal optique de sonde est causée par une discontinuité d'indice de réfraction dans le guide d'onde périphérique,
- l'apparition d'un signal optique de sonde réfléchi est identifiée par le détecteur,
- la localisation de la discontinuité d'indice de réfraction dans le guide d'onde périphérique de la ligne de transport est calculée à partir de la mesure de la puissance et du temps.

La présente invention a comme avantage de permettre la détection de l'intrusion aussitôt qu'elle commence à se produire, et de permettre ainsi une réaction immédiate pour éviter l'accès aux données sensibles confidentielles transportées par le réseau. Bien que le coût d'une telle ligne de transport d'un signal optique soit un peu plus élevé que celui des fibres optiques courantes, la sécurité qu'elle confère au réseau vis-à-vis des intrusions est considérablement augmentée. Cette ligne de transport d'un signal optique peut être utilisée en complément de la technique de la cryptographie, en y apportant de nouvelles fonctionnalités. D'une part elle détecte en temps réel de toute tentative d'intrusion perpétrée sur la ligne de transport d'un signal optique protégée. D'autre part elle permet la localisation précise de la tentative d'intrusion avec une résolution qui dépend de la longueur de la ligne de transport d'un signal optique.

### BREVE DESCRIPTION

D'autres caractéristiques et avantages apparaîtront à la lecture de la description qui suit d'un mode de réalisation, donné bien entendu à titre illustratif et non limitatif, et dans le dessin annexé sur lequel
- la figure 1 illustre schématiquement une vue en coupe d'un premier mode de réalisation d'une ligne de transport d'un signal optique,
- la figure 2 illustre schématiquement une vue en coupe d'un deuxième mode de réalisation d'une ligne de transport d'un signal optique,
- la figure 3 illustre schématiquement une vue en coupe d'un troisième mode de réalisation d'une ligne de transport d'un signal optique,
- la figure 4 illustre schématiquement une vue en coupe d'un quatrième mode de réalisation d'une ligne de transport d'un signal optique,
- la figure 5 illustre schématiquement l'extrémité émettrice d'une ligne de transport d'un signal optique.
- la figure 6 illustre schématiquement un système pour la surveillance par mesure directe,
- la figure 7 illustre schématiquement l'évolution de la puissance en fonction du temps dans le cas d'une détection par mesure directe,
- la figure 8 illustre schématiquement un système pour la surveillance par réflectométrie optique temporelle,
- la figure 9 illustre schématiquement l'évolution de la puissance en fonction du temps dans le cas d'une détection par réflectométrie optique temporelle,
- la figure 10 illustre un procédé pour la détection d'une atteinte à l'intégrité d'une ligne de transport d'un signal optique.

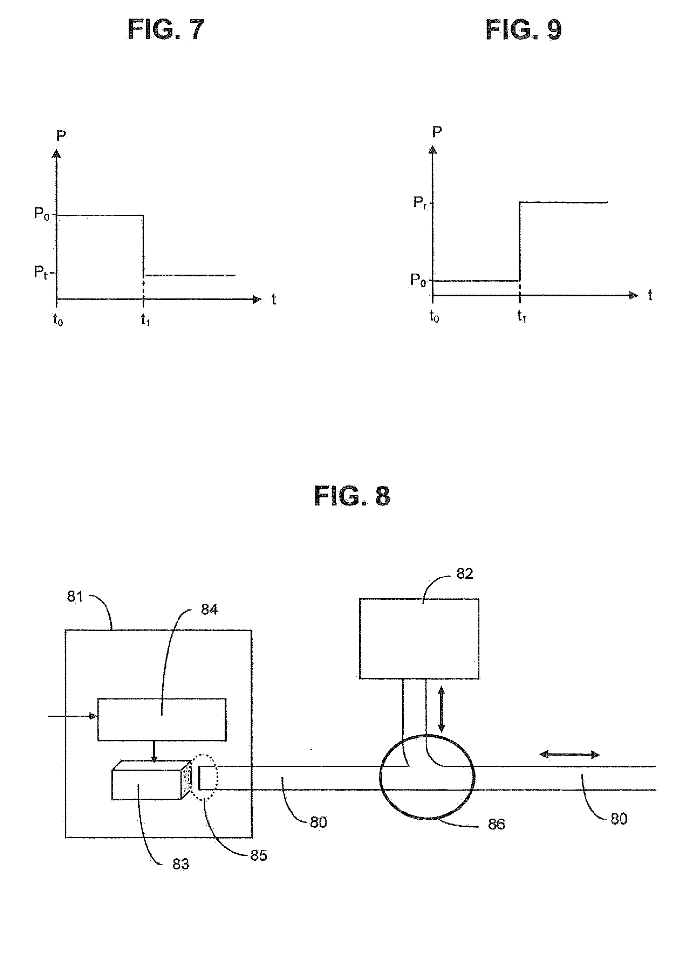

Sur les figures 7 et 9, la puissance P en valeurs relatives est donnée en ordonnée, et en abscisse le temps t en valeurs relatives.

### DESCRIPTION DETAILLEE

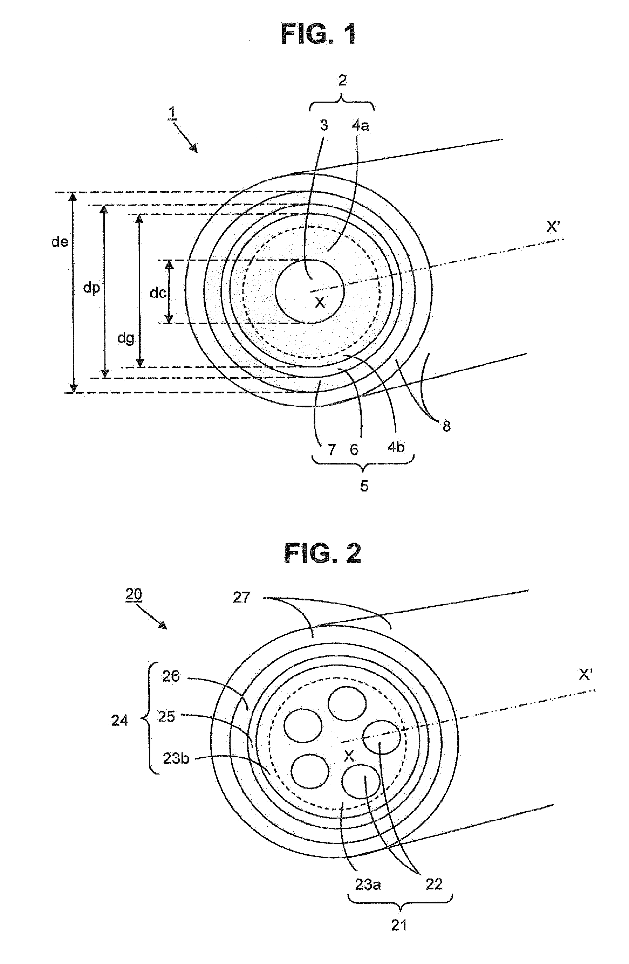

La figure 1 illustre un premier mode de réalisation d'une ligne de transport d'un signal optique porteur de données qui est ici une fibre optique, de préférence une fibre monomode. On entend par fibre optique, au moins un coeur entouré d'une gaine optique (ou « cladding » en anglais), l'ensemble étant protégé par un revêtement (ou « coating » en anglais) apportant notamment une tenue mécanique à la fibre optique.

La fibre optique **1** comprend une zone guidante centrale qui est ici un guide d'onde central **2** défini comme un coeur **3** entouré d'une gaine optique **4a.** L'indice de réfraction nc du coeur **3** est plus faible que l'indice de réfraction ng de la gaine optique **4**a**.** Le coeur **3** et la gaine optique **4a** sont habituellement constitués d'un matériau en verre à base de silice.

Autour de la zone guidante centrale **2** se trouve un guide d'onde périphérique **5** de forme tubulaire fermée, et coaxial au guide d'onde central **2**. Le guide d'onde périphérique **5** est concentrique au guide d'onde central **2** d'axe X-X' afin d'offrir à celui-ci une protection périphérique complète. Le guide d'onde périphérique **5** est défini comme une couche centrale **6** de section annulaire entouré d'une gaine optique. La gaine optique comprend une couche externe 7 et une couche interne **4b.** Il convient de noter que la couche interne **4b** de gaine optique du guide d'onde périphérique **5** est ici constituée par la partie extérieure **4b** d'une couche de gaine optique qui comprend aussi la partie intérieure **4a** de gaine optique contigüe au coeur **3** du guide d'onde central **2.**

L'indice de réfraction np de la couche centrale **6** est inférieur à l'indice de réfraction ni de la couche interne **4b** de gaine optique et inférieur à l'indice de réfraction ne de la couche externe **7** de gaine optique. Les indices de réfraction ni et ne des couches interne **4b** et externe **7** de gaine optique peuvent être égaux ou différents. Dans le cas présent, on comprend que l'indice de réfraction ni de la couche interne **4b** est égal à l'indice de réfraction ng de la gaine optique **4a**. La couche centrale **6** et la couche externe **7** de gaine optique sont habituellement constituées d'un matériau en verre à base de silice. Le revêtement **8** recouvrant l'ensemble est le plus souvent dans un matériau polymère, tel que du PVC par exemple.

La dimension du guide d'onde périphérique est calculée pour chaque application de manière à préserver la qualité du signal optique, porteur des données, qui circule dans la zone guidante centrale de la ligne de transport. Un gain apporté par un amplificateur optique supplémentaire peut être nécessaire pour préserver la qualité des données transportées dans la fibre optique, notamment en compensant les pertes en ligne et en freinant la dégradation du rapport signal à bruit optique.

Par exemple pour la fibre optique **1** illustrée par la figure 1, le diamètre **de** du coeur **3** du guide d'onde central **2** est ici de 9 µm, et le diamètre extérieur **dg** de la somme des couches **4a et 4b** de gaine optique est de 90 µm. Le diamètre extérieur **dp** de la couche centrale **6** du guide d'onde périphérique **5** est de 105 µm, et le diamètre extérieur de de la couche externe **7** de gaine optique est de 125 µm.

Un signal optique, portant des données sensibles à transmettre qui doivent être protégées, circule dans le guide d'onde central **2.** Un signal optique de sonde est injecté dans le guide d'onde périphérique **5.** Le guide d'onde périphérique **5** doit être suffisamment éloigné du guide d'onde central **2** pour ne pas créer d'interférences ou d'effets linéaires avec le signal optique transportant les données.

Dans le deuxième mode de réalisation illustré par la figure 2, la ligne de transport **20** est par exemple de la fibre multicoeur qui comporte une zone guidante centrale **21** comprenant plusieurs coeurs **22** monomodes entourés d'un matériau de gaine optique **23a.** Un signal optique portant des données à transmettre circule dans chacun des coeurs **22.** L'indice de réfraction des coeurs **22** est plus faible que l'indice de réfraction du matériau de gaine optique **23a.** Les coeurs **22** et le matériau de gaine optique **23a** sont habituellement constitués d'un matériau en verre à base de silice.

Autour de la zone guidante centrale **21** d'axe X-X', se trouve un guide d'onde périphérique **24** de forme tubulaire fermée et coaxial à la zone guidante centrale **21.** Le guide d'onde périphérique **24** est constitué d'une couche centrale **25** de section annulaire entouré d'une gaine optique. La gaine optique comprend une couche externe **26** et une couche interne **23b.** Il convient de noter que la couche interne **23b** de gaine optique du guide d'onde périphérique **24** est ici constituée par la partie périphérique extérieure **23b** du matériau de gaine optique **23a** enveloppant les coeurs **22** de la zone guidante centrale **21.**

L'indice de réfraction de la couche centrale **25** du guide d'onde périphérique **24** est inférieur à l'indice de réfraction de la couche externe **26** de gaine optique et inférieur à l'indice de réfraction de la couche interne **23b** de gaine optique, ce dernier étant ici égal à l'indice de réfraction du matériau de gaine optique **23a.** Les indices de réfraction des couches interne **23b** et externe **26** de gaine optique respectivement peuvent être égaux ou différents.

Des signaux optiques, portant les données qui doivent être protégées, circulent dans les coeurs **22** de la zone guidante centrale **21** de la fibre multicoeur. Un signal optique de sonde peut être injecté dans la couche centrale **25** du guide d'onde périphérique **24.**

La couche centrale **25** et la couche externe **26** de gaine optique sont habituellement constituées d'un matériau en verre à base de silice. Le revêtement 27 recouvrant l'ensemble est le plus souvent dans un matériau polymère, tel que du PVC par exemple.

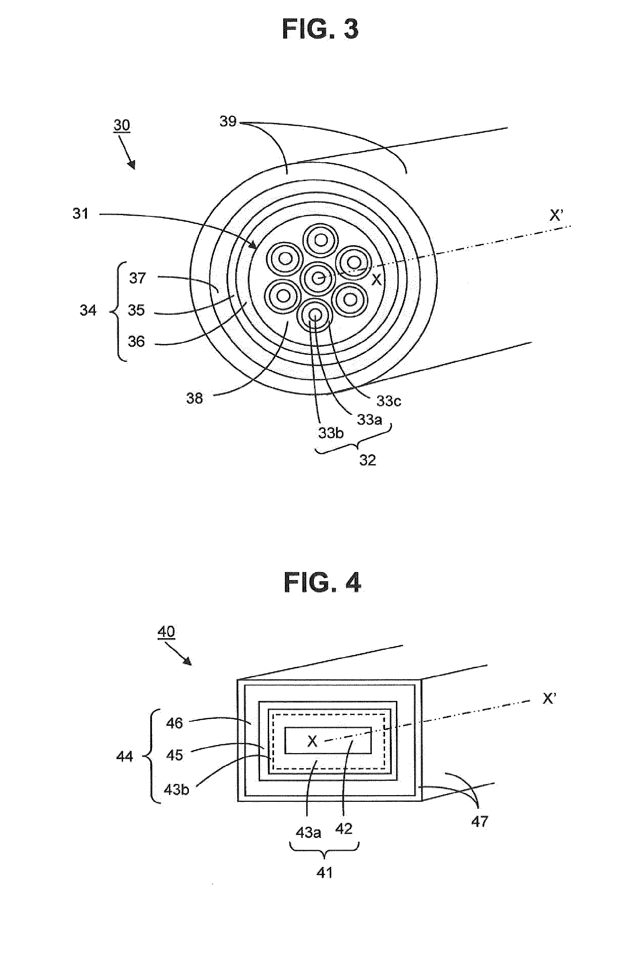

On considérera maintenant la figure 3 qui illustre un troisième mode de réalisation d'une ligne de transport **30** dans lequel la zone guidante centrale **31** d'axe X-X' comporte une pluralité de fibres optiques **32.** Chaque fibre optique **32** comprend un coeur **33a** entouré d'une gaine optique **33b** habituellement constitués d'un matériau en verre à base de silice. La fibre optique 32 est elle-même recouverte d'un revêtement **33c** de protection le plus souvent dans un matériau polymère tel que du PVC par exemple. L'indice de réfraction du coeur **33a** de chaque fibre optique **32** est plus faible que l'indice de réfraction de la gaine optique **33b** qui l'entoure.

Un guide d'onde périphérique **34** entoure la zone guidante centrale **31** contenant les fibres optiques **32.** Le guide d'onde périphérique **34** est composé d'une couche centrale **35** encadrée d'une couche interne **36** de gaine optique et d'une couche externe **37** de gaine optique. Entre le faisceau de fibres optiques **32** et la couche interne **36** de gaine optique du guide d'onde périphérique **34,** l'espace **38** peut être laissé libre (air) ou rempli d'un matériau contribuant par ses propriétés mécaniques à la résistance de la ligne de transport **30.** Un revêtement **39** de protection est enfin déposé sur la couche externe **37** de gaine optique du guide d'onde périphérique **34.**

L'indice de réfraction np de la couche centrale **35** est inférieur à l'indice de réfraction ni de la couche interne **36** et inférieur à l'indice de réfraction ne de la couche externe **37.** Les indices de réfraction ni et ne des couches interne **36** et externe **37** de gaine optique respectivement peuvent être égaux ou différents.

Des signaux optiques, portant les données qui doivent être protégées, circulent dans les coeurs **33a** des fibres optiques **32** de la zone guidante centrale **31.** Un signal optique de sonde est injecté dans la couche centrale **35** du guide d'onde périphérique **34.**

Dans les modes de réalisation illustrés sur les figures 1 à 3, le guide d'onde périphérique a été représenté avec une section annulaire coaxial à l'axe X-X' de la zone guidante centrale de la ligne de transport, mais il est bien entendu que la section du guide d'onde périphérique pourrait avoir toute autre forme géométrique, en particulier si la section de la zone guidante centrale n'est pas circulaire.

La figure 4, par exemple, illustre un quatrième mode de réalisation dans lequel le guide d'onde périphérique a une section rectangulaire.

Il peut s'agir notamment d'un guide d'onde intégré réalisé par la technique dite « photonique sur silicium » sous forme d'une couche déposée, par exemple par épitaxie, sur un substrat SOI (pour « Silicon-On-Insulator » en anglais) qui est un substrat de silicium recouvert d'une couche isolante (oxyde de silicium), elle-même recouverte d'une couche active de silicium. Ce guide d'onde est de dimension très faibles (quelques centaines de nanomètres de section). Le guide d'onde peut être constitué de matériaux semiconducteurs tels que le silicium et le phosphure d'indium, ou bien de matériaux diélectriques tels que le dioxyde de silicium, l'oxynitrure de silicium ou de nitrure de silicium.

La ligne de transport **40** comporte une zone guidante centrale d'axe X-X', qui est ici un guide d'onde central **41** comprenant un coeur **42** de section rectangulaire entouré d'une gaine optique **43a.** Autour du guide d'onde central **41** se trouve un guide d'onde périphérique **44** de forme tubulaire et concentrique au guide d'onde central **41.** Le guide d'onde périphérique **44** est constitué dune couche centrale **45** dont la section a la forme d'un rectangulaire fermé, qui est entourée d'une gaine optique. La gaine optique comprend une couche externe **46** et une couche interne **43b.** Il convient de noter que la couche interne **43b** de gaine optique du guide d'onde périphérique **44** est ici constituée par la partie extérieure **43b** d'une couche de gaine optique qui comprend aussi la partie intérieure **43a** de gaine optique contigüe au coeur **42** du guide d'onde central **41.** Une couche de protection **47,** le plus souvent dans un matériau polymère tel que du PVC par exemple, recouvre l'ensemble.

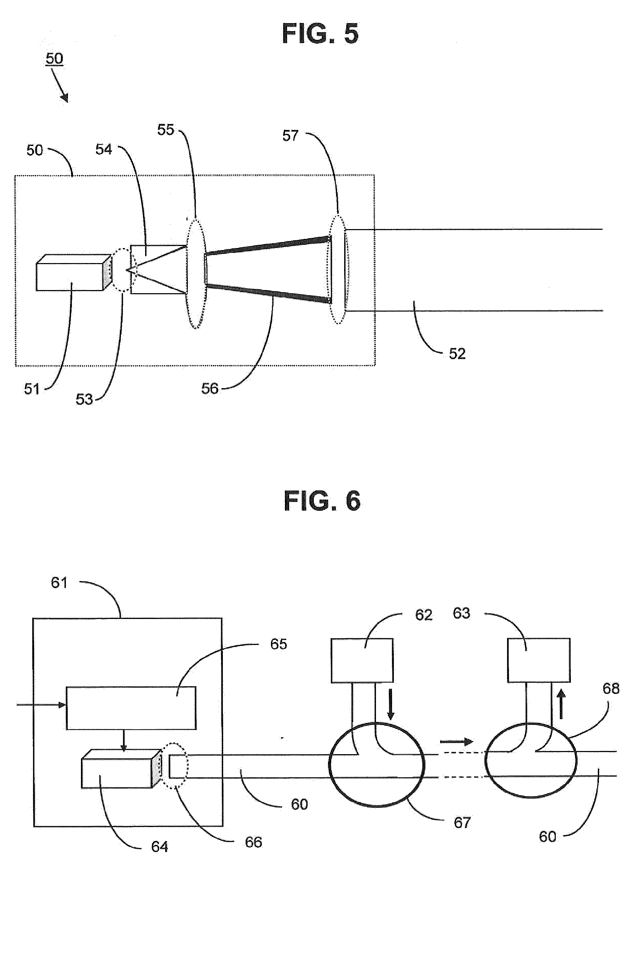

On considérera maintenant la figure 5 illustrant de manière schématique l'extrémité de la ligne de transport où se produit l'émission d'un signal optique de sonde qui est injecté dans le guide d'onde périphérique.

L'émetteur **50** du signal optique de sonde, placé à une extrémité de la ligne de transport, permet d'envoyer un signal optique de sonde, sous forme d'impulsion, dans une ligne de transport **52,** analogue à l'une de celles décrites précédemment. L'émetteur du signal optique de sonde **50** comporte une source d'émission **51** d'un signal optique, qui peut être par exemple un laser impulsionnel ou une photodiode.

Le signal optique de sonde est émis périodiquement sous la forme d'impulsions successives. Le signal optique de sonde a la forme d'une impulsion de manière à constituer une référence temporelle. Dans un milieu d'indice de réfraction n, un signal optique se propage à une vitesse V donnée par V = C/n où C est la vitesse de la lumière dans le vide. La distance d est reliée au temps t par la relation : d = Vt. On peut donc mesurer l'écart entre le pic de référence, correspondant à l'impulsion de signal de sonde envoyé dans le guide périphérique, et un pic réfléchi. On peut aussi détecter la présence de pics intermédiaires, et déterminer leur position à partir de la distance Δd parcourue telle que : Δd = C.Δt/n en mesurant Δt à l'aide d'un oscilloscope.

Le couplage du signal optique de sonde pulsé émit par la source **51** avec la ligne de transport **52** nécessite au moins un élément permettant ce couplage. Dans le mode de réalisation ici illustré, une première zone de couplage **53** du signal optique de sonde permet de coupler la source optique **51** à un dispositif diffractant **54.** Une deuxième zone de couplage **55** permet le couplage du dispositif diffractant **54** avec un guide d'onde **56** de section variable. Le guide d'onde **56** permet l'adaptation avec le guide d'onde périphérique de la ligne de transport **52** par une zone de couplage **57.** Afin de permettre l'adaptation, au moins deux zones de couplage sont nécessaires. Lorsque le dispositif diffractant **54** et le guide d'onde **56** de section variable sont rassemblés dans un seul composant, le nombre minimum de deux zones de couplage est réalisé.

La figure 6 illustre un dispositif de détection par mesure directe d'une dégradation du guide d'onde périphérique de la ligne de transport causée notamment par une tentative d'intrusion dans le réseau de télécommunication. Ce mode de détection est plus particulièrement avantageux lorsque la surveillance s'exerce sur une courte distance de la ligne de transport, comme par exemple dans le cas illustré par la figure 4.

L'extrémité émettrice de la ligne de transport **60** comprend un premier transmetteur **61** pour l'émission/réception d'un signal optique porteur des données. Un émetteur **62** d'un signal de sonde impulsionnel est placé à l'extrémité émettrice de la ligne de transport **60** et un récepteur **63** du signal de sonde est disposé à l'extrémité opposée de la ligne de transport **60** pour la surveillance du réseau de télécommunication.

Le premier transmetteur **61** comprend une source d'émission **64** d'un signal optique porteur des donnés à transmettre dans le réseau, par exemple un laser, contrôlée par un pilote **65.** Une zone de couplage **66** permet d'envoyer le signal optique émis dans la ligne de transport **60.**

L'émetteur **62**, qui est par exemple analogue à l'émetteur du signal de sonde décrit précédemment et illustré par la figure 5, injecte dans le guide périphérique de la ligne de transport **60** un signal optique de sonde pulsé et nécessite la présence d'un coupleur optique **67** spécifiquement associé. De même le récepteur **63** du signal de sonde est relié au guide périphérique de la ligne de transport **60** grâce à un coupleur optique **68.** Le signal de sonde circule dans le guide périphérique de la ligne de transport **60** dans le sens indiqué par les flèches. Le récepteur **63** mesure en continu la puissance **Po** du signal de sonde émis, et transmis par le guide périphérique de la ligne de transport **60**.

Dans le cas d'une intrusion atteignant le guide périphérique de la ligne de transport **60,** une rupture d'indice de réfraction se produit au temps **t**1 dans le guide périphérique de la ligne de transport **60** qui est vu par le signal optique de sonde incident comme un plan réflecteur qui le réfléchi vers sa source **62.** Le récepteur **63** va alors mesurer une puissance transmise **Pt** du signal de sonde qui chute brusquement, comme illustré sur la figure 7, puisqu'une grande partie du signal de sonde émis est réfléchi vers l'extrémité émettrice de la ligne de transport **60.** L'intrusion est détectée, et la localisation de l'intrusion et l'heure de l'intrusion sont immédiatement connues.

La vue schématique de la figure 8 illustre un dispositif de détection par réflectométrie optique temporelle d'une détérioration du guide d'onde périphérique de la ligne de transport causée notamment par une tentative d'intrusion dans le réseau de télécommunication.

La réflectométrie est une méthode de diagnostic non destructive dans laquelle un signal de sonde, envoyé dans le système, est réfléchi vers son point d'injection lorsqu'il rencontre une discontinuité d'indice de réfraction. L'analyse du signal réfléchi permet de déduire des informations sur l'état du système. Le réflectomètre optique temporel OTDR (pour « Optical Time Domain Reflectometer » en anglais) émet une impulsion optique très courte qui est entièrement absorbée en bout de ligne, de telle sorte qu'aucun signal optique n'est réfléchi vers le réflectomètre OTDR. L'apparition d'une discontinuité de l'indice de réfraction du milieu de propagation provoquera la réflexion d'une partie du signal optique de sonde incident vers sa source. La puissance du signal optique réfléchi est alors mesurée en fonction du temps par le réflectomètre OTDR, ce qui permet de localiser la discontinuité avec précision, même sur de très longues distances.

L'extrémité émettrice de la ligne de transport **80** comprend un premier transmetteur **81** pour l'émission/réception du signal porteur des données, et un deuxième transmetteur **82** pour la surveillance du réseau de communication par réflectométrie optique temporelle.

Le premier transmetteur **81** comprend une source d'émission **83** d'un signal optique porteur des donnés à transmettre dans le réseau de communication, par exemple un laser, contrôlée par un pilote **84.** Une zone de couplage **85** permet d'envoyer le signal optique émis dans la ligne de transport **80.**

Dans ce mode de réalisation, le deuxième transmetteur **82** comprend une partie émettrice d'un signal de sonde, qui est par exemple analogue à l'émetteur du signal de sonde décrit précédemment et illustré par la figure 5. Le deuxième transmetteur **82** injecte dans la ligne de transport **80** un signal optique de sonde pulsé et nécessite la présence d'un coupleur optique **86** spécifiquement associé au guide périphérique de la ligne de transport **80.**

Le coupleur optique **86** peut par exemple être réalisé par la fusion du coeur d'une fibre optique classique avec un guide d'onde de la zone guidante centrale de la ligne de transport **80.** Le coupleur optique **86** crée une discontinuité locale de l'indice de réfraction due à une réduction partielle de l'épaisseur du guide périphérique de la ligne de transport **80.** Cette discontinuité d'indice, étant définie et bien connue, n'affecte pas la mesure de la puissance optique du signal optique réfléchi. Le réflectomètre optique temporel OTDR **82** peut être calibré afin de supprimer le pic de réflexion lié à la présence du coupleur optique **86.**

La partie réceptrice du deuxième transmetteur **82** mesure en continu la puissance **Po** du signal de sonde réfléchi dans le guide périphérique de la ligne de transport **80.** Si une intrusion se produit à un endroit quelconque de la ligne de transport **80** atteignant le guide périphérique de la ligne de transport **80,** il en résulte une rupture d'indice de réfraction dans le guide d'onde périphérique de la ligne de transport **80.** Cette rupture d'indice est vue par le signal optique de sonde incident comme un plan réflecteur qui renvoie un signal optique de sonde réfléchi vers sa source **82.**

Dans le cas où une intrusion produit une rupture d'indice de réfraction au temps **t1** dans le guide périphérique de la ligne de transport **80,** la partie réceptrice du deuxième transmetteur **82** mesure alors une puissance réfléchie **Pt** du signal de sonde qui augmente brutalement, comme illustré sur la figure 9. L'intrusion est immédiatement détectée, ce qui peut déclencher une alarme par exemple. La localisation de l'intrusion et l'heure de l'intrusion sont immédiatement connues, et l'information peut être traitée pour être stockées dans une base de données par exemple. Ce mode de détection est plus particulièrement avantageux lorsque la surveillance s'exerce sur une longue distance de la ligne de transport. La localisation de la détérioration du guide périphérique est d'autant plus précise que celle-ci se produit loin du réflectomètre optique temporel OTDR **82.**

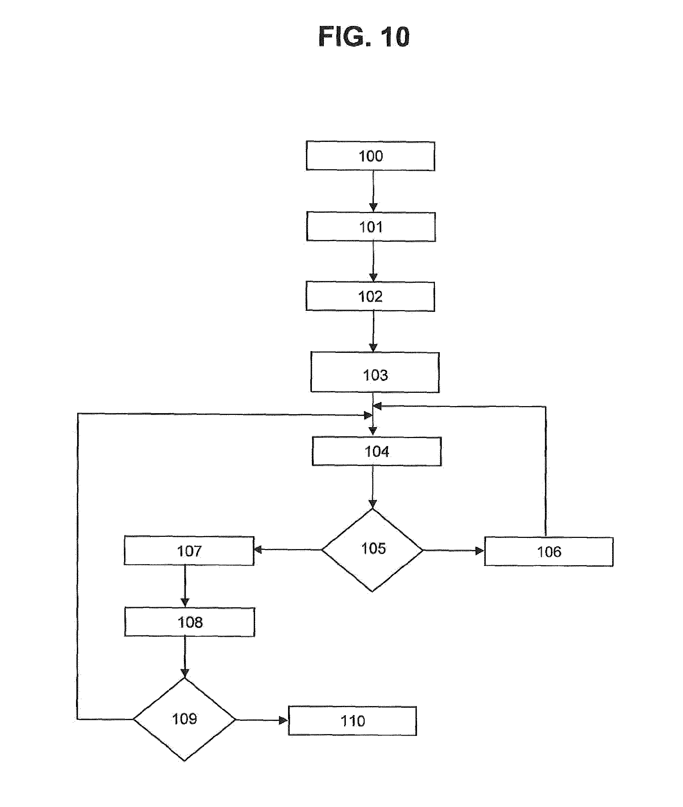

La figure 10 illustre le procédé montrant la manière dont le signal optique de sonde réfléchi est détecté et analysé.

La première étape **100** est l'injection d'un signal de sonde pulsé dans le guide périphérique de la ligne de transport à surveiller par la partie émettrice d'un réflectomètre optique temparel OTDR. Aussitôt, à l'étape **101,** la partie réceptrice du réflectomètre optique temporel OTDR mesure la puissance **Po** du signal réfléchi qui servira de référence. En situation normale, la puissance **Po** du signal réfléchi est très faible (présence du coupleur, ...). La mesure est visualisée sur un oscilloscope ayant une fréquence de balayage propre.

L'étape **102** consiste à effectuer une capture de l'écran de l'oscilloscope, puis un échantillonnage de la courbe. On défini une périodicité de la capture d'écran qui sera réalisée au cours des mesures suivantes. L'étape suivante **103** conduit au stockage des échantillons de mesure recueillis dans un fichier de référence.

La mesure suivante est effectuée à l'étape **104** comme précédemment à l'étape **102,** comprenant une capture de l'écran de l'oscilloscope suivi d'un échantillonnage de la courbe. L'échantillonnage obtenu est comparé à l'étape **105** avec l'échantillon qui a été stocké dans le fichier de référence à l'étape **103.** Deux cas sont alors possibles.

Dans une première situation, l'éventuelle différence observée est compatible avec la tolérance qui a été choisie. Alors, dans une étape **106,** la mesure est stockée dans un fichier temporaire pendant une durée fixée selon le nombre de mesures nécessaire pour permettre de s'assurer de la validité du résultat. Puis la mesure suivante est effectuée à nouveau à l'étape **104** comme précédemment.

Dans une seconde situation, la différence observée est incompatible avec la tolérance qui a été choisie. Alors, dans une étape **107,** la mesure est stockée dans un fichier temporaire, ainsi que l'heure de la mesure et la localisation de la rupture d'indice constatée. La mesure est ensuite reproduite au cours d'une étape **108,** analogue à l'étape **104,** avec une capture l'écran de l'oscilloscope suivi d'un échantillonnage de la courbe. Puis on effectue la comparaison (étape **109)** avec l'échantillon stocké dans le fichier temporaire à l'étape **107.**

Si l'anomalie constatée précédemment a disparue, la mesure est conservée dans le fichier temporaire pendant la durée fixée pour l'étape **106,** et les mesures suivantes sont effectuées à nouveau à l'étape **104** comme expliqué précédemment.

En revanche, si l'anomalie observée est confirmée, l'alerte est donnée dans une étape **110.**

Bien entendu, la présente invention n'est pas limitée au mode de réalisation décrit, mais elle est susceptible de nombreuses variantes accessibles à l'homme de l'art sans que l'on s'écarte de l'esprit de l'invention. En particulier, la zone guidante centrale peut comporter tout type de guide d'onde, et notamment tous type de fibre optique (multimode, photonique, etc...). Le guide d'onde périphérique décrit a une section circulaire ou rectangulaire, mais sa section pourrait avoir toute autre forme géométrique fermée.

## Revendications

1. Ligne de transport d'un signal optique porteur de données comportant une zone guidante centrale d'axe X-X' comprenant au moins un guide d'onde pour la transmission d'un signal optique porteur de données et un guide d'onde périphérique coaxial à l'axe X-X' de la zone guidante centrale.

2. Ligne de transport selon la revendication 1, dans lequel le guide d'onde périphérique comprend
- une couche centrale d'indice de réfraction np,
- une couche interne, adjacente à la face interne de la couche centrale, d'indice de réfraction ni,
- une couche externe, adjacente à la face externe de la couche centrale, d'indice de réfraction ne,
l'indice de réfraction np de la couche centrale étant inférieur à l'indice de réfraction ni de la couche interne, et inférieur à l'indice de réfraction ne de la couche externe.

3. Ligne de transport selon l'une des revendications 1 et 2, dans lequel le guide d'onde périphérique est de forme tubulaire fermée ayant une section circulaire, ovale, carrée ou rectangulaire.

4. Dispositif pour la détection d'une atteinte à l'intégrité d'une ligne de transport d'un signal optique porteur de données comprenant
- une ligne de transport selon l'une des revendications précédentes, comprenant un guide d'onde périphérique,
- un émetteur d'un signal optique de sonde couplé au guide d'onde périphérique de la ligne de transport,
- un signal optique de sonde circulant dans le guide d'onde périphérique de la ligne de transport,
- un détecteur du signal optique de sonde couplé au guide d'onde périphérique de la ligne de transport,
dans lequel le détecteur mesure la puissance du signal optique de sonde et détecte une variation anormale de la puissance du signal optique de sonde.

5. Dispositif selon la revendication 4, dans lequel l'émetteur d'un signal optique de sonde comprend
- une source d'émission d'un signal optique pulsé,
- un dispositif diffractant couplé à la source d'émission,
- un guide d'onde de section variable dont une extrémité est couplée au dispositif diffractant et dont l'extrémité opposée est couplée au guide d'onde périphérique de la ligne de transport, de manière à injecter le signal optique de sonde dans le guide d'onde périphérique.

6. Dispositif selon l'une des revendications 4 et 5, dans lequel la source d'émission du signal optique de sonde est reliée à une première extrémité de la ligne de transport et le détecteur est relié à une seconde extrémité de la ligne de transport de manière à mesurer la puissance du signal de sonde transmis.

7. Dispositif selon l'une des revendications 4 et 5, dans lequel la source d'émission du signal optique de sonde est reliée à une première extrémité de la ligne de transport et le détecteur est reliée à la première extrémité de la ligne de transport de manière à mesurer la puissance d'un signal optique de sonde réfléchi.

8. Dispositif selon la revendication 7, dans lequel le détecteur est couplé au guide d'onde périphérique par l'intermédiaire d'un coupleur optique.

9. Réseau de télécommunication comportant au moins un dispositif de détection d'une atteinte à l'intégrité d'une ligne de transport selon l'une des revendications 1 à 8.

10. Procédé pour la détection d'une atteinte à l'intégrité d'une ligne de transport d'un signal optique selon l'une des revendications 1 à 3 au moyen du dispositif selon l'une des revendications 4 à 8, comprenant
- l'émission d'un signal optique de sonde qui est injecté dans le guide d'onde périphérique de la ligne de transport,
- la circulation du signal optique de sonde dans le guide d'onde périphérique,
- la mesure de la puissance du signal optique de sonde,
- la détection d'une variation anormale de la puissance du signal optique de sonde.

11. Procédé selon la revendication 10, dans lequel le signal optique de sonde est émis périodiquement sous la forme d'impulsions successives.

12. Procédé selon l'une des revendications 10 et 11, dans lequel la détection d'une variation anormale de la puissance du signal optique de sonde est réalisée par une mesure de puissance effectuée par un détecteur placé à l'extrémité de la ligne de transport opposée à celle où se trouve un émetteur de signal optique de sonde.

13. Procédé selon l'une des revendications 10 et 11, dans lequel la détection d'une variation anormale de la puissance du signal optique de sonde est réalisée par une mesure de puissance effectuée par un détecteur placé à l'extrémité de la ligne de transport située du même côté que celle où se trouve un émetteur de signal optique de sonde.

14. Procédé selon la revendication 13, dans lequel
- une réflexion, au moins partielle, du signal optique de sonde est causée par une discontinuité d'indice de réfraction dans le guide d'onde périphérique,
- l'apparition d'un signal optique de sonde réfléchi est identifiée par le détecteur,
- la localisation de la discontinuité d'indice de réfraction dans le guide d'onde périphérique de la ligne de transport est calculée à partir de la mesure de la puissance et du temps.
